# EUROPÄISCHE PATENTSCHRIFT

(11) **EP 1 979 390 B1**
(45) Veröffentlichungstag und Bekanntmachung des Hinweises auf die Patenterteilung: **11.03.2020**
(21) Anmeldenummer: 07703781.0
(22) Anmeldetag: 11.01.2007
(51) Int. Cl.: C08G 18/28, C08G 18/79, C09J 175/04

(54) **POLYURETHAN-KLEBSTOFF MIT SILAN- UND CARBODIIMIDGRUPPEN**
POLYURETHANE ADHESIVE COMPRISING SILANE GROUPS AND CARBODIIMIDE GROUPS
ADHÉSIF À POLYURÉTHANE COMPRENANT DES GROUPES SILANE ET CARBO-DIIMIDE

(30) Priorität: 19.01.2006 EP 06100590
(43) Veröffentlichungstag der Anmeldung: 15.10.2008
(73) Patentinhaber: BASF SE, 67056 Ludwigshafen am Rhein (DE)
(72) Erfinder: SCHUMACHER, Karl-Heinz, 67433 Neustadt (DE); LICHT, Ulrike, 68309 Mannheim (DE); PREYSING, Denise, 68199 Mannheim (DE); BURGHARDT, Andre, 55743 Idar-oberstein (DE)
(74) Vertreter: BASF IP Association
(86) Internationale Anmeldenummer: PCT/EP2007/050236
(87) Internationale Veröffentlichungsnummer: WO 2007/082826

(56) Entgegenhaltungen:
- WO-A-93/23490
- WO-A-99/06459
- WO-A-2005/005565
- US-A- 4 118 536

## Beschreibung

Die Erfindung betrifft einen Klebstoff, enthaltend ein Polyurethan und 0,0001 bis 0,1 mol Carbodiimidgruppen auf 100 g Polyurethan, dadurch gekennzeichnet, dass das Polyurethan einen Gehalt an 0,0001 bis 0,1 mol Hydroxy- oder Alkoxysilangruppen (kurz Silangruppen genannt) auf 100g Polyurethan aufweist.

Wässrige Polyurethandispersionen werden als Klebstoffe, insbesondere auch als Kaschierklebstoffe, z.B. in der Automobil- oder Möbelindustrie verwendet.

Für derartige technische Kaschierungen ist insbesondere eine hohe Wärmestandfestigkeit von Bedeutung, die Verklebung soll auch bei hohen Temperaturen über eine möglichst lange Zeit ihre Festigkeit behalten.

Polyurethane mit Carbodiimidgruppen oder Polyurethandispersionen, welche Carbodiimide als Additiv enthalten, sind bekannt, siehe z.B. DE-A 100 00 656 oder DE-A 100 01 777. In WO 2005/05565 wird die Verwendung derartiger Polyurethane für die technische Kaschierung beschrieben.

Polyurethane mit Alkoxysilangrupen sind z.B. in der EP-A 163214 oder EP-A 315 006 beschrieben; DE-A 42 15 648 betrifft die Verwendung von Polyurethanen mit Alkoxygruppen als Kontaktklebstoff.

Carbodiimide mit Silangruppen werden in DE-A 10 2004 024 195 und DE-A 10 2004 024 196 beschrieben; diese Carbodiimide werden jedoch nicht in Klebstoffen sondern als Stabilisatoren in Kunststoffen verwendet.

Aufgabe der Erfindung war, die anwendungstechnischen Eigenschaften von Polyurethandispersionen für die technische Kaschierung weiter zu verbessern; insbesondere soll die Wärmestandfestigkeit möglichst gut sein.

Dem gemäß wurde der oben definierte Klebstoff gefunden.

Der erfindungsgemäße Klebstoff enthält ein Polyurethan mit 0,0001 bis 0,1 mol Silangruppen, vorzugsweise 0,0005 bis 0,1 Mol, besonders bevorzugt 0,001 bis 0,1 Mol Silangruppen auf 100 g Polyurethan, insbesondere ist der Gehalt an Silangruppen nicht höher als 0,05 Mol/100 g Polyurethan.

Die Silangruppen enthalten mindestens eine Hydroxygruppe oder eine Alkoxygruppe. Im allgemeinen handelt es sich um Alkoxygruppen, bei der späteren Verwendung hydrolisieren die Alkoxygruppen dann zu Hydroxygruppen, die dann weiter reagieren, bzw vernetzen.

Bei den Silangruppen handelt es sich insbesondere um solche der Formel I 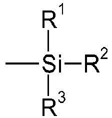 wobei mindestens einer der Reste Reste R¹ bis R³ für eine Hydroxygruppe oder Alkoxygruppe steht und die übrigen Reste für eine Alkoxygruppe, Hydroxygruppe oder eine Alkylgruppe stehen; über die in obiger Formel noch freie Bindung ist die Silangruppe an das Polyurethan gebunden.

Vorzugsweise stehen mindestens eine, vorzugsweise zwei und besonders bevorzugt alle drei Reste R¹ bis R³ für eine Alkoxygruppe.

Insbesondere handelt es sich um C1 bis C9 -, besonders bevorzut um C1 bis C6 -, ganz besonders bevorzugt um C1 bis C3 Alkoxy- oder Alkylgruppen. Insbesondere handelt es sich bei den Alkylgruppen um eine Methylgruppe und bei den Alkoxygruppen um eine Methoxygruppe.

Eine besonders bevorzugte Alkoxysilangruppe trägt 2 oder 3 Methoxgruppen.

Die Silangruppe ist insbesondere durch Umsetzung von Aufbaukomponenten des Polyurethan mit einer Silangruppen enthaltenden Verbindung (im nachfolgenden kurz Silanverbindung) an das Polyurethan gebunden.

Bei der Silanverbindung handelt es sich daher um eine Verbindung mit mindestens einer Isocyanatgruppe oder mindestens einer mit Isocyanat reaktiven Gruppe, z.B. eine primäre oder sekundäre Aminogruppe, eine Hydroxylgruppe oder eine Mercaptogruppe.

Die Silanverbindung kann im Polyurethan als Kettenverlängerer oder endständig am Kettenende eingebaut sein.

Silanverbindungen als Kettenverlängerer enthalten mindestens zwei reaktive Gruppen (Isocyanat- oder mit Isocyanat reaktive Gruppe), welche mit anderen Aufbaukomponenten des Polyurethan umgesetzt werden und so die Polyurethankette verlängern und das Molgewicht vergrößern; im Gegensatz dazu führen Silanverbindungen mit nur einer reaktiven Gruppe bei der Umsetzung zu einem Kettenabbruch und werden endständig eingebaut.

Besonders bevorzugt handelt es sich bei der Silanverbindung um einen Kettenverlängerer.

Geeignete Silanverbindungen sind insbesondere niedermolekular und haben ein Molgewicht unter 5000, insbesondere unter 2000, besonders bevorzugt unter 1000 und ganz besonders bevorzugt unter 500 g/mol; das Molgewicht liegt im allgemeinen oberhalb 50 insbesondere oberhalb 100, bzw. 150 g/mol.

Bei den reaktiven Gruppen der Silanverbindung handelt es sich vorzugsweise um primäre oder sekundäre Aminogruppen. Besonders bevorzugt enthält die Alkoxysilanverbindung zwei primäre Aminogruppen, zwei sekundäre Aminogruppen oder eine primäre und eine sekundäre Aminogruppe.

Als Silanverbindung in Betracht kommen beispielsweise

H₂N-(CH₂)³-Si(OCH₃)³

H₂N-(CH₂)³-NH-(CH₂)³-Si(OCH₃)³,

H₂N-(CH₂)²-NH-(CH₂)²-Si(OCH₃)³,

H₂N-(CH₂)²-NH-(CH₂)³-Si(OCH₃)³,

H₂N-(CH₂)³-NH-(CH₂)²-Si(OCH₃)³

Die Zusammensetzung enthält weiterhin Carbodiiimidgruppen
Carbodiimidgruppen haben die allgemeine Strukturformel -N=C=N-.

Carbodiimidgruppen sind in einfacher Weise aus zwei Isocyanatgruppen unter Abspaltung von Kohlendioxid erhältlich:

-R-N=C=O + 4=C=N-R

-R-N=C=N-R-+CO₂

Ausgehend von Polyisocyanaten, bzw. Diisocyanaten sind so Verbindungen mit Carbodiimidgruppen und gegebenenfalls Isocyanatgruppen, insbesondere endständigen Isocyanatgruppen, erhältlich (im nachfolgenden kurz Carbodiimidverbindungen genannt.

Als Diisocyanate in Betracht kommen z.B. Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Besonders bevorzugt ist TMXDI.

Durch die endständige Isocyanatgruppe können die Carbodiimidverbindungen leicht hydrophil, z.B. durch Umsetzung mit Amino- oder Hydroxysäuren, modifiziert werden. Hydrophil modifizierte Carbodiimidverbindungen lassen sich naturgemäß leichter mit wässrigen Klebstoffen bzw. Klebstoffen auf Basis hydrophiler Polymere mischen.

Ebenso leicht können die Carbodiimidverbindungen an das Polyurethan angebunden werden, in dem die Isocyanatgruppe mit einer reaktiven Gruppe des Polymeren, z.B. eine Aminogruppe oder Hydroxylgruppe umgesetzt wird.

Geeignete Carbodiimidverbindungen enthalten im allgemeinen im Mittel 1 bis 20, vorzugsweise 1 bis 15, besonders bevorzugt 2 bis 10 Carbodiimidgruppen.

Das zahlenmittlere Molgewicht Mₙ beträgt vorzugsweise 100 bis 10000 besonders bevorzugt 200 bis 5000 und ganz besonders 500 bis 2000 g/mol.

Das zahlenmittlere Molekulargewicht wird bestimmt durch Endgruppenanalyse der Diisocyanate (d.h. Verbrauch der Isocyanatgruppen durch Carbodiimidbildung, s. unten) oder falls die Endgruppenanalyse nicht möglich ist, durch Gelpermeationschromatographie (Polystyrolstandard, THF als Elutionsmittel).

Der erfindungsgemäße Klebstoff kann daher Carbodiimidverbindungen als Additiv oder gebundener Form als Aufbaukomponenten des Polyurethan enthalten.

Vorzugsweise sind mehr als 50 Mol %, insbesondere mehr als 80 Mol %, besonders bevorzugt mehr als 90 Mol % aller in der Zusammensetzung vorhandenen Carbodiimidgruppen an das Polyurethan gebunden, insbesondere sind alle Carbodiimidgruppen an das Polyurethan gebunden.

Besonders bevorzugt besteht das Polyurethane überwiegend aus Polyisocyanaten, insbesondere Diisocyanaten einerseits und als Reaktionspartner, Polyesterdiole, Polyetherdiole oder deren Gemische andererseits.

Vorzugsweise ist das Polyurethan zu mindestens 40 Gew.-%, besonders bevorzugt zu mindestens 60 Gew.-% und ganz besonders bevorzugt zu mindestens 80 Gew.-% aus Diisocyanaten, Polyetherdiole und/oder Polyesterdiolen aufgebaut.

Bevorzugt enthält das Polyurethan dazu Polyesterdiole in einer Menge von mehr als 10 Gew.-%, bezogen auf das Polyurethan.

Vorzugsweise hat das Polyurethan einen Erweichungspunkt oder Schmelzpunkt im Bereich von -50 bis 150 °C, besonders bevorzugt von 0 bis 100, und ganz besonders bevorzugt von 10 bis 90 °C.

Besonders bevorzugt hat das Polyurethan einen Schmelzpunkt im vorstehenden Temperaturbereich.

Vorzugsweise ist das Polyurethan in Wasser dispergiert ist, es handelt sich also um eine wässrige Polyurethandispersion. Insbesondere enthält das Polyurethan anionische Gruppen, insbesondere Carboxylatgruppen, um seine Dispergierbarkeit in Wasser zu gewährleisten.

Insgesamt ist das Polyurethan vorzugsweise aufgebaut aus:
a) Diisocyanaten,
b) Diolen, von denen
   b₁) 10 bis 100 mol-%, bezogen auf die Gesamtmenge der Diole (b), ein Molekulargewicht von 500 bis 5000 g/mol aufweisen,
   b₂) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, ausgewählt aus Hydroxylgruppen, Mercaptogruppen, primäre oder sekundäre Aminogruppen oder Isocyanatgruppen und
e) gegebenenfalls von den Monomeren (a) bis (d) verschiedenen einwertigen Verbindungen mit einer reaktiven Gruppe, ausgewählt aus einer Hydroxylgruppe, einer primären oder sekundären Aminogruppe oder einer Isocyanatgruppe.

Insbesondere zu nennen sind als Monomere (a) Diisocyanate X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Zum Aufbau der Polyurethane kann man als Verbindungen außer den vorgenannten auch Isocyanate einsetzen, die neben den freien Isocyanatgruppen weitere verkappte Isocyanatgruppen, z.B. Uretdiongruppen tragen.

Im Hinblick auf gute Filmbildung und Elastizität kommen als Diole (b) vornehmlich höhermolekulare Diole (b1) in Betracht, die ein Molekulargewicht von etwa 500 bis 5000, vorzugsweise von etwa 1000 bis 3000 g/mol haben. Es handelt sich hierbei um das zahlenmittlere Molgewicht Mn. Mn ergibt sich durch Bestimmung der Anzahl der Endgruppen (OH-Zahl).

Bei den Diolen (b1) kann es sich um Polyesterpolyole handeln, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z.B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Ferner kommen gegebenenfalls auch Polycarbonat-Diole, wie sie z.B. durch Umsetzung von Phosgen mit einem Überschuss von den als Aufbaukomponenten für die Polyesterpolyole genannten niedermolekularen Alkohole erhalten werden können, in Betracht.

Gegebenenfalls können auch Polyesterdiole auf Lacton-Basis mitverwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind e-Caprolacton, β-Propiolacton, g-Butyrolacton und/oder Methyl-e-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des e-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Bevorzugt sind aliphatische Polyesterdiole auf Basis von Alkandicarbonsäuren und Alkandiolen.

Als Diole b1) kommen auch Polyetherdiole in Betracht. Polyetherdiole sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxyphenyl)-propan oder Anilin erhältlich. Besonders bevorzugt sind Polypropylenoxid, Polytetrahydrofuran eines Molekulargewichts von 240 bis 5000, und vor allem 500 bis 4500.

Unter b₁) fallen nur Polyetherdiole, die zu weniger als 20 Gew.-% aus Ethylenoxid bestehen. Polyetherdiole mit mindestens 20 Gew.-% sind hydrophile Polyetherdiole, welche zu Monomeren c) zählen.

Gegebenenfalls können auch Polyhydroxyolefine mitverwendet werden, bevorzugt solche mit 2 endständigen Hydroxylgruppen, z.B. α,-ω-Dihydroxypoiybutadien, α,-ω-Dihydroxypolymethacrylester oder α,-ω-Dihydroxypolyacrylester als Monomere (c1). Solche Verbindungen sind beispielsweise aus der EP-A 0 622 378 bekannt. Weitere geeignete Polyole sind Polyacetale, Polysiloxane und Alkydharze.

Bevorzugt handelt es sich bei mindestens 50 mol-%, insbesondere mindestens 90 mol% der Diole b₁) um Polyesterdiole Besonders bevorzugt werden als Diole b₁) ausschließlich Polyesterdiole verwendet.

Die Härte und der Elastizitätsmodul der Polyurethane lassen sich erhöhen, wenn als Diole (b) neben den Diolen (b1) noch niedermolekulare Diole (b2) mit einem Molekulargewicht von etwa 60 bis 500, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden.

Als Diole b₂) kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bevorzugt beträgt der Anteil der Diole (b₁), bezogen auf die Gesamtmenge der Diole (b) 10 bis 100 mol-% und der Anteil der Monomere (b₂), bezogen auf die Gesamtmenge der Diole (b) 0 bis 90 mol-%. Besonders bevorzugt beträgt das Verhältnis der Diole (b1) zu den Monomeren (b2) 0,1 : 1 bis 5:1, besonders bevorzugt 0,2 : 1 bis 2 : 1.

Um die Wasserdispergierbarkeit der Polyurethane zu erreichen, enthalten die Polyurethane von den Komponenten (a), (b) und (d) verschiedene Monomere (c), die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen, als Aufbaukomponente. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), (c), (d) und (e) wird im allgemeinen so bemessen, dass die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (e).

Bevorzugte Monomere mit nichtionischen hydrophilen Gruppen sind Polyethylenoxiddiole mit mindestens 20 Gew.-% Ethylenoxid, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3,905,929 und US-A 3,920,598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen oder tertiäre Aminogruppen.

(Potentiell) ionische Monomere (c) sind z.B. in Ullmanns Encyklopädie der technischen Chemie, 4. Auflage, Band 19, S.311-313 und beispielsweise in der DE-A 14 95 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁-bis C₆-Alkylhalogeniden oder Benzylhalogeniden, z.B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3,412,054 beschrieben sind. Insbesondere sind Verbindungen der allgemeinen Formel (c₁) 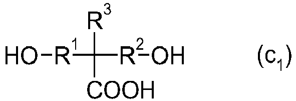 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b₂) sowie die Diole (b₁) geeignet.

Als Monomere (c) mit gegenüber Isocyanaten reaktiven Aminogruppen kommen Aminocarbonsäuren wie Lysin, β-Alanin oder die in der DE-A 20 34 479 genannten Addukte von aliphatischen diprimären Diaminen an α,β.-ungesättigte Carbon- oder Sulfonsäuren in Betracht.

Solche Verbindungen gehorchen beispielsweise der Formel (c₂)

H₂N-R⁴-NH-R⁵-X (c₂)

in der
- R⁴ und R⁵ unabhängig voneinander für eine C₁- bis C₆-Alkandiyl-Einheit, bevorzugt Ethylen
   und X für COOH oder SO₃H stehen.

Besonders bevorzugte Verbindungen der Formel (c₂)sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin besonders bevorzugt sind die Addukte der oben genannten aliphatischen diprimären Diamine an 2-Acrylamido-2-methylpropansulfonsäure, wie sie z.B. in der DE-B 19 54 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen.

Als Monomere c) besonders bevorzugt sind Monomere mit einer Carboxylat- oder ganz besonders bevorzugt mit einer Sulfonatgruppe. Die Sulfonat- oder Carboxylatgruppen können z.B. in Form ihrer Salze mit einem Alkaliion, einem Ammoniumion oder einer sonstigen Base als Gegenion vorliegen.

Besonders bevorzugt sind Sulfonat- oder Carboxylatgruppe mit einer bei Anwendungstemperaturen (bis zu 200 °C) flüchtigen Base, insbesondere einer Aminobase neutralisiert.

Die Monomere (d), die von den Monomeren (a) bis (c) verschieden sind und welche gegebenenfalls auch Bestandteile des Polyurethans sind, dienen im allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1,129,128), Ketazine (vgl. z.B. die US-A 4,269,748) oder Aminsalze (s. US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d).

Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die gegebenenfalls mitverwendet werden, sind Monoisocyanate, Monoalkohole und monoprimäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl- oder Methacrylsäure wie Hydroxyethylacrylat oder Hydroxyethylmethacrylat.

Überzüge mit einem besonders guten Eigenschaftsprofil erhält man vor allem dann, wenn als Monomere (a) im wesentlichen nur aliphatische Diisocyanate, cycloaliphatische Diisocyanate oder araliphatische Diisocyanate eingesetzt werden.

Diese Monomerkombination wird in hervorragender Weise ergänzt durch Diaminosulfonsäure-Alkali-Salze als Komponente c); ganz besonders durch die N-(2-Aminoethyl)-2-aminoethansulfonsäure bzw. ihre entsprechenden Alkalisalze, wobei das Na-Salz am besten geeignet ist, und eine Mischung von DETA/IPDA als Komponente (d).

Bei den Alkoxysilanverbindungen handelt es sich insbesondere um Aufbaukomponenten d) oder e), vorzugsweise um e):; Carbodiimidverbindungen, sofern an das Polyurethan gebunden, fallen vorzugsweise unter die Definition von Komponente a).

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann.

Normalerweise werden die Komponenten (a) bis (e) sowie ihre jeweiligen Molmengen so gewählt, dass das Verhältnis A : B mit
- A: der Molmenge an Isocyanatgruppen und
- B: der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) zur Herstellung des Polyurethans erfolgt vorzugsweise bei Reaktionstemperaturen von bis zu 180 °C, bevorzugt bis zu 150 °C unter Normaldruck oder unter autogenem Druck.

Die Herstellung von Polyurethanen, bzw. von wässrigen Polyurethandispersionen ist dem Fachmann bekannt.

Der erfindungsgemäße Klebstoff enthält vorzugsweise weitere reaktive Gruppen, die untereinander oder mit den Carbodiimidgruppen eine Vernetzungsreaktion eingehen können. Das sind insbesondere Säuregruppen, z. B. Carboxylgruppen oder Sulfonsäuregruppen. In einer besonderen Ausführungsform können die für die Dispergierung notwendigen Sulfonat- oder Carboxylatgruppen (siehe oben, Monomere c)) als Salze von flüchtigen Basen vorliegen. In Betracht kommen z. B. Alkylaminoverbindungen oder insbesondere Hydroxyalkylaminoverbindungen wie Triisopropanolamin. Bei der Verwendungstemperatur (bis zu 200 °C) entweichen dann die Basen, es entstehen Carboxylgruppen oder Sulfonsäuregruppen für die Vernetzungsreaktion.

Carboxylgruppen werden auch durch Umesterungsreaktionen gebildet, so dass auch ohne einen anfänglichen Gehalt an Carboxylgruppen im Polyurethan eine Vernetzung eintritt.

Der erfindungsgemäße Klebstoff ist vorzugsweise ein wässriger Klebstoff.

Der Klebstoff kann allein aus dem Polyurethan und gegebenenfalls dem Carbodiimid (falls nicht an das Polyurethan gebunden) bestehen oder auch weitere Zusatzstoffe enthalten, z.B. weitere Bindemittel, Füllstoffe, Verdicker, Benetzungshilfsmittel, Entschäumer, Vernetzer. Weitere Zusatzstoffe können in einfacher Weise zum Polyurethan, bzw. zur wässrigen Dispersion des Polyurethan gegeben werden.

Ein Hauptbestandteil des Klebstoffs ist das Polyurethan als Bindemittel. Der Klebstoff besteht vorzugsweise zu mindestens 10 Gew. %, besonders bevorzugt zu mindestens 20 Gew.%, ganz besonders bevorzugt zu mindestens 30 Gew. % aus dem Polyurethan, bezogen auf den Feststoffgehalt, d.h. ohne Wasser oder sonstige bei 21 °C, 1 bar flüssige Lösemittel)

Als weitere Bindemittel, die im Gemisch mit dem Polyurethan verwendet werden können, kommen insbesondere radikalisch polymerisierte Polymere, vorzugsweise in Form ihrer wässrigen Dispersionen in Betracht.

Derartige Polymere bestehen vorzugsweise zu mindestens 60 Gew.- % aus sogenannten Hauptmonomeren, ausgewählt aus
C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren. Als Polymeren insbesondere zu erwähnen sind solche, die zu mehr als 60 Gew.-% aus C1-C20 Alkyl(meth)acrylaten aufgebaut sind (kurz Polyacrylate) oder solche, die zu mehr als 60 Gew. %, z. B. auch zu 100 aus Vinylestern, insbesondere Vinylacetat und Ethylen bestehen (Vinylacetat/Ethylen Copolymer).

Der Feststoffgehalt (alle Bestandteile außer Wasser oder sonstige bei 21 °C, 1 bar flüssige Lösemittel) liegt vorzugsweise zwischen 20 und 80 Gew.-%.

Der erfindungsgemäße Klebstoff kann als einkomponentiger (1K) oder zweikomponentiger (2K) Klebstoff verwendet werden. Bei einem 2K Klebstoff muss vor der Verwendung noch ein weitere Zuatzstoff, im allgemeinen ein Vernetzer (z.B. eine Isocyanat-oder Azirdinverbindung zugesetzt werden. Bei einem 1K Klebstoff ist dies nicht notwendig; der 1K Klebstoff ist lagerstabil und enthält bereits die notwendigen Vernetzer bzw. benötigt keine oder keine weiteren Vernetzer.

Insbesondere eignet sich der erfindungsgemäße Klebstoff als 1K Klebstoff.

Besonders geeignet ist der erfindungsgemäße Klebstoff als Kaschierklebstoff, d.h. zur dauerhaften Verklebung großflächiger Substrate. Die großflächigen Substrate sind insbesondere ausgewählt aus Polymerfolien, Papier, Metallfolien oder Holzfurnier, Faservliesen aus natürlichen oder synthetischen Fasern; sie werden miteinander oder mit sonstigen Formteilen, z.B. Formteile aus Holz oder Kunststoff, verklebt.

Besonders bevorzugt sind Polymerfolien, z.B. Folien aus Polyester, wie Polyethylenterephthalat, Polyolefinen wie Polyethylen, Polypropylen oder Polyvinylchlorid, aus Polyacetat. Besonders bevorzugt sind geschäumte PVC-Folien und geschäumte thermoplastische Polyolefinfolien (TPO).

Die zu verklebenden Substrat oder Formteile können vorbehandelt sein, z.B. können sie mit Haftvermittlern beschichtet sein.

Bei den Formteilen kann es sich auch um Formteile handeln, welche aus synthetischen oder natürlichen Fasern oder Spänen aufgebaut sind, insbesondere sind Formteile aus Kunststoff, z.B. ABS, geeignet. Die Formteile können eine beliebige Form haben.

Die Beschichtung der Substrate oder Formteile mit dem kann nach üblichen Auftragsverfahren erfolgen. Nach der Beschichtung erfolgt eine Trocknung, vorzugsweise bei Raumtemperatur oder Temperaturen bis zu 80 °C, um Wasser oder sonstige Lösemittel zu entfernen.

Die aufgebrachte Klebstoffmenge beträgt vorzugsweise 0,5 bis 100 g/m², besonders bevorzugt 2 bis 80 g/m², ganz besonders bevorzugt 10 bis 70 g/m².

Vorzugsweise wird entweder das Formteil oder die Folie einseitig beschichtet auch eine Beschichtung beider zu verklebender Substrate (beidseitige Beschichtung) kommt in Betracht.

Bei Verwendung von 1K-Klebstoffen kann das mit Klebstoff beschichtete Substrat oder Formteil gelagert werden; flexible Substrate können z.B. auf Rollen aufgewickelt werden. Das beschichtete Substrat oder Formteil ist lagerstabil, d.h. auch nach mehreren Wochen Lagerzeit kann das beschichtete Substrat mit unverändert guten Ergebnissen verarbeitet werden.

Bei Verwendung eines 2K-Klebstoffs kann entsprechend verfahren werden, bevorzugt wird jedoch das Formteil beschichtet und nicht die Folie; nach einer kurzen Lagerzeit (wenige Stunden) sollte die Folie aufkaschiert werden.

Zur Verklebung werden die zu verklebenden Teile zusammengefügt. Der Klebstoff wird dann thermisch aktiviert. Die Temperatur in der Klebstoffschicht beträgt vorzugsweise 20 bis 200 °C, besonders bevorzugt 30 bis 180 °C.

Die Verklebung erfolgt vorzugsweise unter Druck, dazu können z.B. die zu verklebenden Teile mit einem Druck von 0,005 bis 5 N/mm² zusammengepresst werden.

Die erhaltenen Verbunde zeichnen sich durch hohe mechanische Festigkeit auch bei erhöhten Temperaturen (Wärmestandfestigkeit) oder unter sich stark ändernden Klimabedingungen (Klimabeständigkeit) aus.

Besondere Bedeutung hat das erfindungsgemäße Verfahren in der Auto-, Möbel oder Schuhinsustrie, z.B. bei der Verklebung von flexiblen Substraten auf Autoinnenteilen, wie Amaturenbretter, Türinnenverkleidungen und Hutablagen oder zur Herstellung von folienbeschichteten Möbeln oder Verklebung von Schuhteilen miteinander.

### Beispiele

### Silanverbindung:

H₂N-CH₂-NH-CH₂-CH₂-CH₂Si-(OCH₃)³, als Geniosil GF 91 von der Firma Goldschmidt erhältlich.

3-Aminopropyltrimethoxysilan, als Dynasilan AMMO von der Firma Degussa erhältlich.

### Beispiel 1

### mit Silan und Carbodiimid

### Carbodiimid : Silan Molverhältnis 1 : 1

Es werden 745 g (0,30 mol) eines Polyesters der OH-Zahl 45,2 (auf Basis von Butandiol/Adipinsäure), 13,4 g (0,10 mol) Dimethylolpropionsäure, 1,0 g Tetrabutyl-orthotitanat (10%ig) und 100 g Aceton vorgelegt, bei 60 °C mit 112,3 g (0,505 mol) Isophorondiisocyanat versetzt und 4 Stunden bei 90 °C gerührt. Dann werden nacheinander 900 g Aceton, 20,25 g Triisopropanolamin (0,09 mol), 5 g Carbodiimid (Polymer auf Basis von 1,3-Bis(1-isocyanato-1-methylethyl)benzol, Isocyanatendgruppen) (in 5 g Aceton) (0,005 mol), 0,97 g Aminopropyltrimethoxysilan (0,005 mol), 31,35 g Aminoethylaminoethan-sulfonsäure-Na-Salz (0,075 mol) und 40 g Wasser zudosiert und weitere 20 min nachgerührt. Das Reaktionsgemisch wird mit 1300 g Wasser dispergiert; danach wird das Aceton im Vakuum abdestilliert und der Feststoffgehalt auf ca. 40 % eingestellt.

**Analysendaten:**

| | |
|---|---|
| Feststoffgehalt: | 43,3 % |
| LD: | 91,9 |
| Visk.: | 169 mPas |
| pH: | 8,1 |
| K-Wert: | 94,5 |

### Beispiel 2

### Analog Beispiel 1, jedoch kein Triisopropanolamin als Base zur Neutralisierung

Es werden 745 g (0,30 mol) eines Polyesters der OH-Zahl 45,2 (auf Basis von Butandiol/Adipinsäure), 13,4 g (0,10 mol) Dimethylolpropionsäure, 1,0 g Tetrabutyl-orthotitanat (10%ig) und 100 g Aceton vorgelegt, bei 60 °C mit 112,3 g (0,505 mol) Isophorondiisocyanat versetzt und 4 Stunden bei 90 °C gerührt. Dann werden nacheinander 900 g Aceton, 5 g Carbodiimid (Polymer auf Basis von 1,3-Bis(1-isocyanato-1-methylethyl)benzol) (in 5 g Aceton) (0,005 mol), 44 g Aminoethylaminoethan-sulfonsäure-Na-Salz (0,105 mol), 0,97 g Aminopropyltrimethoxysilan (0,005 mol) und 40 g Wasser zudosiert und weitere 5 min nachgerührt. Das Reaktionsgemisch wird mit 1300 g Wasser dispergiert; danach wird das Aceton im Vakuum abdestilliert und der Feststoffgehalt auf ca. 40 % eingestellt.

**Analysendaten:**

| | |
|---|---|
| Feststoffgehalt: | 39,4 % |
| LD: | 91,2 |
| Visk.: | 84,8 mPas |
| pH: | 6,8 |

### Beispiel 3

### mit Monoaminosilan (Einbau als endständige Gruppe im Polyurethan)

Es werden 745 g (0,30 mol) eines Polyesters der OH-Zahl 45,2 (auf Basis von Butandiol/Adipinsäure), 13,4 g (0,10 mol) Dimethylolpropionsäure, 1,0 g Tetrabutyl-orthotitanat (10%ig) und 100 g Aceton vorgelegt, bei 60 °C mit 112,3 g (0,505 mol) Isophorondiisocyanat versetzt und 4 Stunden bei 90 °C gerührt. Dann werden nacheinander 900 g Aceton, 20,25 g Triisopropanolamin (85%ig) (0,09 mol), 5 g Carbodiimid (Polymer auf Basis von 1,3-Bis(1-isocyanato-1-methylethyl)benzol) (in 5 g Aceton) (0,005 mol), 26,82 g Aminoethylaminoethan-sulfonsäure-Na-Salz (0,064 mol), 2,87 g Dynasylan AMMO (0,016 mol) und 40 g Wasser zudosiert und weitere 5 min nachgerührt. Das Reaktionsgemisch wird mit 1300 g Wasser dispergiert; danach wird das Aceton im Vakuum abdestilliert und der Feststoffgehalt auf ca. 40 % eingestellt.

**Analysendaten:**

| | |
|---|---|
| Feststoffgehalt: | 42,7 % |
| LD: | 97,2 |
| Visk.: | 87,2 mPas |
| pH: | 7,0 |

### Vergleichsbeispiel 1

### Ohne Carbodiimid

Es werden 745 g (0,30 mol) eines Polyesters der OH-Zahl 45,2 (auf Basis von Butandiol/Adipinsäure), 13,4 g (0,10 mol) Dimethylolpropionsäure, 1,0 g Tetrabutylortho-titanat (10%ig) und 100 g Aceton vorgelegt, bei 60 °C mit 112,3 g (0,505 mol) Isophorondiisocyanat versetzt und 4 Stunden bei 90 °C gerührt. Dann werden nacheinander 900 g Aceton, 20,25 g Triisopropanolamin (85% ig) (0,09 mol), 1,94 g Aminopropyltrimethoxysilan (0,01 mol), 23,33 g Aminoethylaminoethan-sulfonsäure-Na-Salz (0,07 mol) und 40 g Wasser zudosiert und weitere 5 min nachgerührt. Das Reaktionsgemisch wird mit 1300 g Wasser dispergiert; danach wird das Aceton im Vakuum abdestilliert und der Feststoffgehalt auf ca. 40 % eingestellt.

**Analysendaten:**

| | |
|---|---|
| Feststoffgehalt: | 42,7 % |
| Visk.: | 112 mPas |
| pH: | 6,85 |
| K-Wert: | 59,5 |

### Vergleichsbeispiel 2

### Ohne Silanverbindung

Es werden 745 g (0,30 mol) eines Polyesters der OH-Zahl 45,2 (auf Basis von Butandiol/Adipinsäure), 13,4 g (0,10 mol) Dimethylolpropionsäure, 1,0 g Tetrabutyl-orthotitanat (10%ig) und 100 g Aceton vorgelegt, bei 60 °C mit 112,3 g (0,505 mol) Isophorondiisocyanat versetzt und 4 Stunden bei 90 °C gerührt. Dann werden nacheinander 900 g Aceton, 20,25 g Triisopropanolamin (85% ig) (0,09 mol), 10 g Carbodiimid (Polymer auf Basis von 1,3-Bis(1-isocyanato-1-methylethyl)benzol) (in 5 g Aceton) (0,01 mol), 29,33 g Aminoethylaminoethan-sulfonsäure-Na-Salz (0,07 mol) und 40 g Wasser zudosiert und weitere 5 min nachgerührt. Das Reaktionsgemisch wird mit 1300 g Wasser dispergiert; danach wird das Aceton im Vakuum abdestilliert und der Feststoffgehalt auf ca. 40 % eingestellt.

**Analysendaten:**

| | |
|---|---|
| Feststoffgehalt: | 42,5 % |
| LD: | |
| Visk.: | 12,6 mPas |
| pH: | 6,8 |

### Anwendungstechnische Prüfung:

Zur Bestimmung der Wärmestandfestigkeit wird die Schälfestigkeit eines Verbundes aus einer PVC- Folie (Streifen der Breite 5 cm) und einem ABS Formteil bei 100 °C bestimmt.

Dazu wurden die Polyurethandispersionen der Beispiele und Vergleichsbeispiele mit einer Dispersion eines Vinylacetat/Ethylen-Copolymeren im Gewichtsverhältnis 1: 1 (fest) gemischt und auf das ABS Formteil gesprüht und getrocknet (Schichtdicke 80 g/m2 (trocken)). Die Kaschierung mit der PVC Folie erfolgte in einer Presse 20 Sekunden lang bei einer Temperatur von 90 °C (Druck 0,8 kp/cm2)

Nach 5 Tagen Lagerung bei Raumtemperatur wurde die Schälfestigkeit bei 100 °C bestimmt.

| Polyurethan aus | Schälfestigkeit bei 100 °C |
|---|---|
| Beispiel 1 | 25 N/ 5 cm |
| Beispiel 2 | 26 N/ 5 cm |
| Beispiel 3 | 21 N/5 cm |
| Vergleichsbeispiel 1 | 18 N / 5 cm |
| Vergleichsbeispiel 2 | 14 N/ 5 cm |

## Patentansprüche

1. Klebstoff, enthaltend ein Polyurethan und 0,0001 bis 0,1 mol Carbodiimidgruppen auf 100 g Polyurethan, **dadurch gekennzeichnet, dass** das Polyurethan einen Gehalt an 0,0001 bis 0,1 mol Hydroxy- oder Alkoxysilangruppen (kurz Silangruppen genannt) auf 100g Polyurethan aufweist.

2. Klebstoff gemäß Anspruch 1, **dadurch gekennzeichnet, dass** es sich um Silangruppen der Formel I 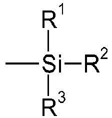 handelt, wobei mindestens einer der Reste R¹ bis R³ für eine Alkoxygruppe oder Hydroxygruppe steht und die übrigen Reste für eine Alkoxygruppe, Hydroxygruppe oder eine Alkylgruppe stehen.

3. Klebstoff gemäß Anspruch 1 oder 2, **dadurch gekennzeichnet, dass** die Silangruppen durch Umsetzung von Aufbaukomponeneten des Polyurethan mit einer Silangruppen enthaltenden Verbindung (im nachfolgenden kurz Silanverbindung) an das Polyurethan gebunden sind.

4. Klebstoff gemäß einem der Ansprüche 1 bis 3, **dadurch gekennzeichnet, dass** die Silanverbindung als Kettenverlängerer im Polyurethan eingebaut ist, d.h. dass die Silanverbindung mindestens zwei reaktive Gruppen enthält, welche mit anderen Aufbaukomponenten des Polyurethan umgesetzt werden.

5. Klebstoff gemäß einem der Ansprüche 1 bis 4, **dadurch gekennzeichnet, dass** die Silanverbindung mindestens zwei mit Isocyanat reaktive Aminogruppen enthält.

6. Klebstoff gemäß einem der Ansprüche 1 bis 5, **dadurch gekennzeichnet, dass** die Silanverbindung zwei primäre Aminogruppen, zwei sekundäre Aminogruppen oder eine primäre und eine sekundäre Aminogruppe enthält.

7. Klebstoff gemäß einem der Ansprüche 1 bis 6, **dadurch gekennzeichnet, dass** das Polyurethan Carbodiimidgruppen enthaltende Verbindungen (im nachfolgenden kurz Carbodiimidverbindungen genannt) als Aufbaukomponenten enthält oder die Zusammensetzung Carbodiimidverbindungen als Additiv enthält.

8. Klebstoff gemäß einem der Ansprüche 1 bis 7, **dadurch gekennzeichnet, dass** die Carbodiimidverbindungen im Mittel 2 bis 10 Carbodiimidgruppen pro Molekül enthalten.

9. Klebstoff gemäß einem der Ansprüche 1 bis 8, **dadurch gekennzeichnet, dass** es sich bei der Carbodiimidverbindung um ein Carbodiimid auf Basis Tetramethylxylylendiisocyanat (TMXDI) handelt.

10. Klebstoff gemäß einem der Ansprüche 1 bis 9, **dadurch gekennzeichnet, dass** mehr als 50 Mol-% aller in der Zusammensetzung vorhandenen Carbodiimidgruppen an das Polyurethan gebunden sind.

11. Klebstoff gemäß einem der Ansprüche 1 bis 10, **dadurch gekennzeichnet, dass** das Polyurethan im übrigen zu mindestens 60 Gew.-% aus Diisocyanaten , Polyetherdiolen und/oder Polyesterdiolen aufgebaut ist.

12. Klebstoff gemäß einem der Ansprüche 1 bis 11, **dadurch gekennzeichnet, dass** das Polyurethan in Wasser dispergiert ist, es sich also um eine wässrige Polyurethandispersion handelt.

13. Klebstoff gemäß einem der Ansprüche 1 bis 12, **dadurch gekennzeichnet, dass** das Polyurethan anionische Gruppen, insbesondere Sulfonatgruppen oder Carboxylatgruppen enthält.

14. Klebstoff gemäß einem der Ansprüche 1 bis 13, **dadurch gekennzeichnet, dass** das Polyurethan einen Schmelzpunkt im Bereich von -50 bis 150 °C, vorzugsweise von 0 bis 100 °C hat.

15. Klebstoff gemäß einem der Ansprüche 1 bis 14, **dadurch gekennzeichnet, dass** sie zu mindestens 60 Gew.-% aus dem Polyurethan besteht, bezogen auf den Feststoffgehalt, d.h. ohne Wasser und Lösemittel).

16. Verwendung der Zusammensetzung gemäß einem der Ansprüche 1 bis 15 als ein komponentiger (1K)-Klebstoff.

17. Verwendung der Zusammensetzung gemäß einem der Ansprüche 1 bis 15 als Kaschierklebstoff, d.h. zur dauerhaften Verklebung großflächiger Substrate.

18. Verwendung gemäß einem der Ansprüche 16 bis 17, **dadurch gekennzeichnet, dass** großflächige Substrate, ausgewählt aus Polymerfolien, Papier, Metallfolien oder Holzfurnier, Faservliesen aus natürlichen oder synthetischen Fasern, miteinander oder mit sonstigen Formteilen, z.B. Formteile aus Holz oder Kunststoff, verklebt werden.

19. Kaschierte Formteile, erhältlich durch Verwendung gemäß einem der Ansprüche 16 bis 18.

## Claims

1. An adhesive comprising a polyurethane and 0.0001 to 0.1 mol of carbodiimide groups per 100 g of polyurethane, wherein the polyurethane contains 0.0001 to 0.1 mol of hydroxysilane or alkoxysilane groups (silane groups for short) per 100 g of polyurethane.

2. The adhesive according to claim 1, wherein said silane groups are groups of the formula I 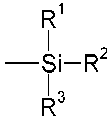 where at least one of the radicals R¹ to R³ is an alkoxy group or hydroxyl group and the remaining radicals are each an alkoxy group, hydroxyl group or alkyl group.

3. The adhesive according to claim 1 or 2, wherein the silane groups are attached to the polyurethane as a result of reaction of synthesis components of the polyurethane with a compound comprising silane groups (silane compound for short below).

4. The adhesive according to any one of claims 1 to 3, wherein the silane compound has been incorporated as a chain extender in the polyurethane, i.e., wherein the silane compound comprises at least two reactive groups which are reacted with other synthesis components of the polyurethane.

5. The adhesive according to any one of claims 1 to 4, wherein the silane compound comprises at least two isocyanate-reactive amino groups.

6. The adhesive according to any one of claims 1 to 5, wherein the silane compound comprises two primary amino groups, two secondary amino groups or one primary and one secondary amino group.

7. The adhesive according to any one of claims 1 to 6, wherein the polyurethane comprises compounds comprising carbodiimide groups (carbodiimide compounds for short below) as synthesis components or the composition comprises carbodiimide compounds as an additive.

8. The adhesive according to any one of claims 1 to 7, wherein the carbodiimide compounds comprise on average 2 to 10 carbodiimide groups per molecule.

9. The adhesive according to any one of claims 1 to 8, wherein the carbodiimide compound is a carbodiimide based on tetramethylxylylene diisocyanate (TMXDI).

10. The adhesive according to any one of claims 1 to 9, wherein more than 50 mol% of all of the carbodiimide groups present in the composition are attached to the polyurethane.

11. The adhesive according to any one of claims 1 to 10, wherein the polyurethane is otherwise synthesized from at least 60% by weight of diisocyanates, poly-etherdiols and/or polyesterdiols.

12. The adhesive according to any one of claims 1 to 11, wherein the polyurethane is in dispersion in water and the adhesive thus constitutes an aqueous polyurethane dispersion.

13. The adhesive according to any one of claims 1 to 12, wherein the polyurethane comprises anionic groups, especially sulfonate groups or carboxylate groups.

14. The adhesive according to any one of claims 1 to 13, wherein the polyurethane has a melting point in the range from -50 to 150°C, preferably from 0 to 100°C.

15. The adhesive according to any one of claims 1 to 14, which is composed of at least 60% by weight of the polyurethane, based on the solids content, i.e., without water and solvent).

16. The use of the composition according to any one of claims 1 to 15 as a one-component (1 K) adhesive.

17. The use of the composition according to any one of claims 1 to 15 as a laminating adhesive, i.e., for the permanent adhesive bonding of extensive substrates.

18. The use according to either of claims 16 and 17, wherein extensive substrates selected from polymer films, paper, metal foils or wood veneer, nonwoven webs of natural or synthetic fibers, are bonded to one another or to other moldings, e.g., moldings of wood or plastic.

19. A laminated molding obtainable through use according to any one of claims 16 to 18.

## Revendications

1. Adhésif, contenant un polyuréthane et 0,0001 à 0,1 mole de groupes carbodiimide pour 100 g de polyuréthane, **caractérisé en ce que** le polyuréthane présente une teneur de 0,0001 à 0,1 mole en groupes hydroxy- ou alcoxysilane (en abrégé nommés groupes silane) pour 100 g de polyuréthane.

2. Adhésif selon la revendication 1, **caractérisé en ce qu'**il s'agit de groupes silane de la formule I : 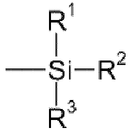 dans laquelle au moins un des radicaux R¹ à R³ représente un groupe alcoxy ou un groupe hydroxy, et les autres radicaux représentent un groupe alcoxy, un groupe hydroxy ou un groupe alkyle.

3. Adhésif selon la revendication 1 ou 2, **caractérisé en ce que** les groupes silane sont reliés au polyuréthane par mise en réaction de composants constitutifs du polyuréthane avec un composé contenant des groupes silane (ci-après en abrégé composé de silane).

4. Adhésif selon l'une quelconque des revendications 1 à 3, **caractérisé en ce que** le composé de silane est incorporé dans le polyuréthane en tant qu'allongeur de chaînes, c.-à-d. que le composé de silane contient au moins deux groupes réactifs qui sont mis en réaction avec d'autres composants constitutifs du polyuréthane.

5. Adhésif selon l'une quelconque des revendications 1 à 4, **caractérisé en ce que** le composé de silane contient au moins deux groupes amino réactifs avec les isocyanates.

6. Adhésif selon l'une quelconque des revendications 1 à 5, **caractérisé en ce que** le composé de silane contient deux groupes amino primaires, deux groupes amino secondaires, ou un groupe amino primaire et un groupe amino secondaire.

7. Adhésif selon l'une quelconque des revendications 1 à 6, **caractérisé en ce que** le polyuréthane contient des composés contenant des groupes carbodiimide (ci-après en abrégé nommés composés de carbodiimide) en tant que composants constitutifs, ou la composition contient des composés de carbodiimide en tant qu'additif.

8. Adhésif selon l'une quelconque des revendications 1 à 7, **caractérisé en ce que** les composés de carbodiimide contiennent en moyenne 2 à 10 groupes carbodiimide par molécule.

9. Adhésif selon l'une quelconque des revendications 1 à 8, **caractérisé en ce que** le composé de carbodiimide consiste en un carbodiimide à base de diisocyanate de tétraméthylxylylène (TMXDI).

10. Adhésif selon l'une quelconque des revendications 1 à 9, **caractérisé en ce que** plus de 50 % en moles de tous les groupes carbodiimide présents dans la composition sont reliés au polyuréthane.

11. Adhésif selon l'une quelconque des revendications 1 à 10, **caractérisé en ce que** le polyuréthane est pour le reste formé par au moins 60 % en poids de diisocyanates, de polyéther-diols et/ou de polyesterdiols.

12. Adhésif selon l'une quelconque des revendications 1 à 11, **caractérisé en ce que** le polyuréthane est dispersé dans de l'eau, et il s'agit par conséquent d'une dispersion de polyuréthane aqueuse.

13. Adhésif selon l'une quelconque des revendications 1 à 12, **caractérisé en ce que** le polyuréthane contient des groupes anioniques, notamment des groupes sulfonate ou des groupes carboxylate.

14. Adhésif selon l'une quelconque des revendications 1 à 13, **caractérisé en ce que** le polyuréthane présente un point de fusion dans la plage allant de -50 à 150 °C, de préférence de 0 à 100 °C.

15. Adhésif selon l'une quelconque des revendications 1 à 14, **caractérisé en ce qu'**il est constitué par au moins 60 % en poids du polyuréthane, par rapport à la teneur en solides, c.-à-d. sans l'eau et le solvant).

16. Utilisation de la composition selon l'une quelconque des revendications 1 à 15 en tant qu'adhésif monocomposant (1K).

17. Utilisation de la composition selon l'une quelconque des revendications 1 à 15 en tant qu'adhésif de contre-collage, c.-à-d. pour le collage durable de substrats de grande surface.

18. Utilisation selon l'une quelconque des revendications 16 à 17, **caractérisée en ce que** des substrats de grande surface, choisis parmi les films polymères, le papier, les films métalliques ou les placages de bois, les non-tissés fibreux à base de fibres naturelles ou synthétiques, sont collés les uns avec les autres ou avec d'autres pièces moulées, p. ex. des pièces moulés en bois ou en matière plastique.

19. Pièces moulées contrecollées, pouvant être obtenues par l'utilisation selon l'une quelconque des revendications 16 à 18.
